# DEMANDE DE BREVET EUROPEEN

(11) **EP 4 241 990 A2**
(43) Date de publication de la demande: **13.09.2023**
(21) Numéro de dépôt: 23178325.9
(22) Date de dépôt: 28.04.2017
(51) Int. Cl.: B32B 37/15

(54) **APPAREIL DE MOULAGE POUR LA FORMATION D'UN DISPOSITIF DE RETENUE**

(30) Priorité: 29.04.2016 FR 1653870; 29.04.2016 FR 1653872; 29.04.2016 FR 1653873; 29.04.2016 FR 1653888; 29.04.2016 FR 1653894; 29.04.2016 FR 1653897; 29.04.2016 FR 1653866
(62) Demande divisionnaire de: 17725688.0
(71) Demandeur: Aplix, 44850 Le Cellier (FR)
(72) Inventeur: BOSSER, Damien, 44850 Le Cellier (FR); MAHE, Anthony, 44850 Le Cellier (FR)
(74) Mandataire: Cabinet Beau de Loménie

(57) **Abrégé**

L'invention concerne un appareil de moulage (10) pour la formation d'un dispositif de retenue. L'appareil de moulage (10) comprend une bande de moulage (12) et un support de moulage (24). La bande de moulage (12) comporte une face interne (14), une face externe (16), une pluralité de cavités (18) traversantes s'étendant de la face externe (16) à la face interne (14), la bande de moulage (12) s'étendant selon une direction longitudinale (X) et présentant une direction transversale (Y), perpendiculaire à la direction longitudinale (X), et une direction de hauteur (Z), perpendiculaire à la direction longitudinale (X) et à la direction transversale (Y). La face interne (14) est configurée pour venir en appui contre une face de moulage (26) du support de moulage (24), dans lequel la face interne (14) de la bande de moulage (12) et/ou la face de moulage (26) du support de moulage (24) comporte un réseau de passages, le réseau de passages formant évent et reliant les cavités (18) entre elles lorsque la bande de moulage (12) est en appui contre le support de moulage (24).

## Description

### Arrière-plan de l'invention

Le présent exposé concerne le domaine des dispositifs de retenue et en particulier le domaine des appareils de fabrication de dispositifs de retenue à crochets.

Les appareils conventionnels pour la réalisation de systèmes de fermeture comprenant des éléments auto-agrippant tels que des crochets utilisent de manière conventionnelle des moyens de distribution d'une matière plastique dans des cavités formées sur un rouleau de moulage ou dans une bande de moulage.

Par ailleurs, la distribution de matière plastique dans les cavités est réalisée de sorte qu'il se forme, du côté des moyens de distribution de la matière plastique, un ruban continu formant une base pour les crochets ou les préformes de crochets moulés dans les cavités.

La distribution de la matière plastique dans les cavités peut être réalisée par pressage de la matière plastique extrudée dans les cavités à l'aide, par exemple, d'un rouleau de pressage ou par injection directe de matière plastique dans les cavités.

On connaît des appareils de fabrication de retenue à crochets comprenant une bande de moulage, qui est une bande fermée sur elle-même et tendue sur des moyens d'entrainement en rotation, par exemple deux rouleaux. La matière plastique est injectée ou pressée dans les cavités de la bande de moulage en vis-à-vis d'un des rouleaux d'entrainement ou en vis-à-vis d'un support de moulage. Le rouleau d'entrainement ou le support de moulage viennent ainsi fermer les cavités de la bande de moulage en vis-à-vis de l'emplacement où est injectée ou pressée la matière plastique afin de définir un volume donné de matière plastique destiné à former une préforme des crochets ou les crochets eux-mêmes.

Toutefois, au vu des impératifs économiques, les vitesses de défilement de la bande de moulage sont telles que lors de la distribution de la matière plastique dans les cavités, il est possible, que chaque cavité

(ou une partie d'entre elles seulement) ne soit pas remplie par de la matière plastique et qu'une poche d'air soit piégée dans les cavités. De ce fait, toutes les préformes ou tous les crochets ne sont pas formés de manière optimale sur la base et le dispositif de retenue à crochets peut être moins performant.

### Objet et résumé de l'invention

Le présent exposé vise à remédier au moins en partie à ces inconvénients.

A cet effet, le présent exposé concerne un appareil de moulage pour la formation d'un dispositif de retenue, l'appareil de moulage comprenant une bande de moulage et un support de moulage, la bande de moulage comportant une face interne, une face externe, une pluralité de cavités traversantes s'étendant de la face externe à la face interne, la bande de moulage s'étendant selon une direction longitudinale et présentant une direction transversale, perpendiculaire à la direction longitudinale, et une direction de hauteur, perpendiculaire à la direction longitudinale et à la direction transversale, la face interne étant configurée pour venir en appui contre une face de moulage du support de moulage, dans lequel la face interne de la bande de moulage et/ou la face de moulage du support de moulage comporte un réseau de passages, le réseau de passages formant évent et reliant les cavités entre elles lorsque la bande de moulage est en appui contre le support de moulage.

La bande de moulage est par exemple une bande de moulage fermée sur elle-même et tendue sur des moyens d'entrainement en rotation de la bande de moulage, par exemple deux rouleaux d'entrainement en rotation. Un des rouleaux d'entrainement en rotation de la bande de moulage peut faire office de support de moulage. Le support de moulage peut également être distinct des moyens d'entrainement en rotation.

Dans l'appareil de moulage, l'injection de matière plastique dans les cavités est réalisée par la face externe de la bande de moulage, en vis-à-vis du support de moulage, c'est-à-dire lorsque la face interne de la bande de moulage est en appui contre la face de moulage du support de moulage.

Grâce au réseau de passages formant évent et reliant les cavités entre elles lorsque la bande de moulage est en appui contre le support de moulage, c'est-à-dire que la face interne de la bande de moulage est en appui contre la face de moulage du support de moulage, les cavités ne sont pas complètement fermées lors de l'injection de la matière plastique. Les cavités ne sont donc pas étanches à l'air.

Ainsi, lors de l'injection de la matière plastique dans les cavités, même à vitesse importante de défilement de la bande de moulage, la matière plastique injectée dans chaque cavité pousse l'air présent dans chaque cavité vers le réseau de passages et l'air s'échappe vers l'atmosphère par l'évent formé par le réseau de passages entre la bande de moulage et le support de moulage. L'air peut s'échapper vers l'atmosphère par les cavités qui ne sont pas remplies de matière plastique et qui sont reliées aux cavités en cours de remplissage par le réseau de passages. L'air peut également s'échapper vers l'atmosphère par les côtés latéraux de la bande de la bande de moulage. Il est alors possible de fabriquer des dispositifs de retenue à des vitesses importantes et de réduire considérablement la pression nécessaire au remplissage des cavités de moulage ainsi que l'effort à fournir pour le démoulage des préformes et/ou crochets.

On comprend que l'air n'est plus enfermé dans la cavité par la matière plastique et ne présente donc pas de résistance au remplissage de la cavité par la matière plastique. Aussi, on assure un remplissage optimal des cavités par la matière plastique, ce qui permet ensuite d'obtenir un dispositif de retenue à crochets, par exemple, présentant de bonnes performances d'accrochage avec une contrepartie à boucles et/ou une contrepartie à crochets. L'effet « ventouse » lors du démoulage des crochets et/ou préformes est alors réduit, voir supprimé. Les contraintes exercées sur le ruban lors du démoulage sont considérablement réduites.

La face interne de la bande moulage et/ou la face de moulage du support de moulage peut présenter une hauteur maximale de rugosité Rz supérieure ou égale à 1,0 µm, de préférence supérieure ou égale à 3,0 µm et inférieure ou égale à 50,0 µm.

Le réseau de passages est formé par la rugosité de la face interne de la bande de moulage et/ou par la rugosité de la face de moulage du support de moulage. Cette rugosité permet de former l'évent permettant l'évacuation de l'air des cavités dans lesquelles la matière plastique est injectée. Toutefois, cette rugosité permet de maîtriser la quantité de matière plastique pouvant sortir de la cavité par la face interne de la bande de moulage.

Cette rugosité peut être obtenue en ponçant la face interne de la bande moulage et/ou la face de moulage du support de moulage avec du papier de verre, par exemple avec du papier de verre de grains compris entre 16 et 400, en particulier 240.

Cette rugosité peut également être obtenue par sablage de la face interne de la bande moulage et/ou de la face de moulage du support de moulage.

Cette rugosité peut également être obtenue par grainage chimique ou laser, par moletage ou encore par projection plasma.

La face interne peut présenter un rebord entourant une partie débouchante de chaque cavité et faisant saillie de la face interne, les rebords définissant entre eux le réseau de passages, chaque rebord pouvant présenter une hauteur variable, de sorte que, lorsque la bande de moulage est en appui contre le support de moulage, au moins une partie du rebord n'est pas en appui contre le support de moulage, de sorte que chaque cavité est connectée avec l'atmosphère par l'intermédiaire du réseau de passages.

Comme la partie débouchante de chaque cavité est entourée par un rebord faisant saillie de la face interne de la bande de moulage, une partie du réseau de passages est formé par la face interne de la bande de moulage, entre les rebords. Par ailleurs, chaque rebord présentant une hauteur variable, lorsque la bande de moulage est en appui contre le support de moulage, au moins une partie du rebord n'est pas en appui contre le support de moulage, de sorte qu'une partie du réseau de passages est également formée par le rebord.

On comprend que la hauteur du rebord est mesurée par rapport à la face externe de la bande de moulage et que cette hauteur est la hauteur maximale du rebord, mesurée dans un plan de coupe parallèle à la direction de hauteur, c'est-à-dire parallèle à l'axe des cavités, et passant par la cavité.

Un maximum de différence entre deux hauteurs d'un même rebord d'une cavité peut être supérieur ou égal à 1,0 µm, de préférence supérieure ou égal à 2,0 µm, encore plus de préférence supérieure ou égal à 4,0 µm et inférieure ou égale à 100,0 µm, de préférence inférieure ou égale à 50,0 µm.

Le rebord présentant une hauteur variable, on compare plusieurs des hauteurs maximales d'un même rebord, mesurées dans différents plans de coupe parallèles à la direction de hauteur et on détermine un maximum de différence entre toutes les hauteurs, ce maximum est supérieur ou égal à 1,0 µm de sorte à former un passage d'air entre la cavité et le reste du réseau de passages.

De préférence, le maximum de différence est supérieur ou égal à 6,0 µm, encore plus de préférence supérieur ou égal à 8,0 µm.

De préférence, le maximum de différence est inférieur ou égal à 50 µm.

Le réseau de passages peut s'étendre selon la direction longitudinale.

On comprend que le réseau de passage permet, lorsque la bande de moulage est en appui contre le support de moulage de former un évent permettant l'évacuation de l'air dans la direction longitudinale. On comprend que le réseau de passage peut être uniquement formé de passages strictement parallèles à la direction longitudinale.

Le réseau de passages peut s'étendre selon la direction transversale.

On comprend que le réseau de passage permet, lorsque la bande de moulage est en appui contre le support de moulage de former un évent permettant l'évacuation de l'air dans la direction transversale et/ou la direction longitudinale. On comprend que le réseau de passage peut être uniquement formé de passages strictement parallèles à la direction transversale.

Le réseau de passage peut également être formé de passages s'étendant parallèlement à la direction longitudinale et parallèlement à la direction transversale.

Chaque cavité peut définir une tige, s'étendant de la face externe vers la face interne, et peut comprendre une extrémité formant une tête, s'étendant à partir de la tige vers la face interne de la bande de moulage. Chaque cavité peut également en outre définir une tige, s'étendant entre la face externe et la face interne sur toute l'épaisseur de la bande de moulage.

On peut ainsi former un élément de retenue présentant une tige et une tête, la tête étant reliée à la base du ruban par la tige.

Chaque cavité de la bande de moulage peut être configurée pour former une préforme d'un élément de retenue.

La préforme peut ensuite être déformée par des moyens connus afin de former un élément de retenue ou comme détaillé dans la demande de brevet n° FR 16 53894 incorporée par référence.

Le support de moulage peut être un rouleau de moulage.

Ainsi, on utilise un des rouleaux d'entrainement de la bande de moulage comme support de moulage.

La bande de moulage peut comprendre entre 10 et 500 cavités/cm², en particulier 250 cavités/cm² ± 75 cavités/cm².

Dans la direction de hauteur, chaque cavité peut avoir une hauteur supérieure ou égale à 5,0 µm, de préférence supérieure ou égale à 20,0 µm, encore plus de préférence supérieure ou égale à 100,0 µm et inférieure ou égale à 5 000,0 µm, de préférence inférieure ou égale à 800,0 µm, encore plus de préférence inférieure ou égale à 500,0 µm.

Lorsque les cavités ne sont pas entourées d'un rebord, la hauteur de la cavité est mesurée entre les faces interne et externe de la bande de moulage, par exemple par rapport à deux surfaces médianes définissant chaque face.

Lorsque les cavités sont entourées d'un rebord, la hauteur de la cavité est mesurée à partir de la face externe de la bande moulage et par rapport au point le plus élevé du rebord mesurée dans un plan de coupe parallèle à la direction de hauteur, c'est-à-dire parallèle à l'axe des cavités, et passant par la cavité.

La bande de moulage peut comprendre un matériau à base de nickel.

Le nickel permet notamment de former la bande de moulage sans fin continue ou encore fermée sur elle-même d'un seul tenant tout en nickel. La bande de moulage ne présente donc pas de discontinuité de matière et donc de jonction pouvant donner lieu à une fragilité de la bande de moulage. En effet, si la bande de moulage est soudée sur elle-même, la zone de soudure est une zone de fragilité de la bande de moulage.

On entend par matériau à base de nickel, des matériaux dont la teneur massique en nickel est majoritaire. On comprend que le nickel est donc l'élément dont la teneur massique dans le matériau est la plus élevée. Le matériau à base de nickel est par exemple un alliage métallique à base de nickel ayant une teneur massique d'au moins 40% de nickel, de préférence d'au moins 60% de nickel, encore plus préférentiellement d'au moins 80% de nickel.

La bande de moulage peut également être réalisée en acier nickelé, c'est-à-dire que la bande de moulage est réalisée à partir d'une bande d'acier dans lesquelles les cavités sont perforées et ensuite, cette bande d'acier est recouverte de plusieurs couches de nickel, par exemple par électrolyse.

Cette bande de moulage réalisée en acier nickelé comprend entre 5 et 20% en masse de nickel.

La bande de moulage peut être obtenue par un procédé de fabrication additive, par exemple par dépôt chimique ou électrochimique, par frittage de poudre par laser, par lithographie, par galvanoplastie, par électroformage, ...

La bande de moulage peut présenter, dans la direction longitudinale, une longueur comprise entre 0,5 et 5 m.

La bande de moulage peut présenter, dans la direction transversale, une largeur comprise entre 5 et 3 000 mm.

Chaque cavité peut présenter une symétrie de rotation autour d'un axe parallèle à la direction de hauteur.

On forme ainsi un élément de retenue ou une préforme présentant une symétrie de rotation autour d'un axe perpendiculaire à la base du ruban. On comprend que lors du démoulage du ruban, les éléments de retenue ou les préformes peuvent être déformés plastiquement et ne pas présenter la symétrie de rotation après démoulage.

Une portion du réseau de passages entourant au moins une des cavités peut présenter une forme sensiblement hexagonale.

Cette forme hexagonale permet d'arranger les cavités les unes par rapport aux autres en « nid d'abeille » ou en quinconce. Cet arrangement des cavités permet de réaliser un agencement dense des éléments de retenue.

Un maximum de différence entre la hauteur d'au moins un des rebords et une hauteur d'un passage adjacent dudit rebord peut être inférieure ou égale à 100,0 µm.

De préférence, un maximum de différence entre la hauteur d'au moins un des rebords et une hauteur d'un passage adjacent dudit rebord peut être inférieure ou égale à 75,0 µm, encore plus de préférence inférieure ou égale à 50,0 µm.

La hauteur du passage est mesurée à partir de la face externe de la bande de moulage, au point présentant la hauteur minimale de passage lorsque la hauteur de passage est mesurée dans différents plans de coupe parallèles à la direction de hauteur.

### Brève description des dessins

D'autres caractéristiques et avantages de l'invention ressortiront de la description suivante de modes de réalisation de l'invention, donnés à titre d'exemples non limitatifs, en référence aux figures annexées, sur lesquelles :
- la figure 1 est une vue schématique en coupe d'un appareil de moulage pour la formation d'un dispositif de retenue ;
- la figure 2 est une vue schématique en coupe d'un autre appareil de moulage pour la formation d'un dispositif de retenue ;
- la figure 3 est une vue schématique de la face interne d'une bande de moulage selon un premier mode de réalisation de la bande de moulage ;
- la figure 4A est une vue en coupe de la bande de moulage centrée sur la cavité dans le plan de coupe IV-IV de la figure 3 ;
- la figure 4B est une vue en section de la bande de moulage centrée sur la cavité dans le plan de coupe IV-IV de la figure 3, la bande moulage étant en appui contre le support de moulage ;
- la figure 5 est une vue schématique de dessus de la face interne d'une bande de moulage selon un deuxième mode de réalisation de la bande de moulage ;
- la figure 6A est une vue partielle en coupe et en perspective de la bande de moulage selon le plan VI-VI de la figure 5 ;
- la figure 6B est une vue en section de la bande de moulage centrée sur la cavité dans le plan de coupe VI-VI de la figure 5, la bande moulage étant en appui contre le support de moulage ;
- la figure 7A est une vue partielle en coupe et en perspective de la bande de moulage selon le plan VII-VII de la figure 5 ;
- la figure 7B une vue en section de la bande de moulage centrée sur la cavité dans le plan de coupe VII-VII de la figure 5, la bande moulage étant en appui contre le support de moulage ;
- la figure 8 est une vue partielle en coupe d'une cavité selon un autre mode de réalisation de la bande de moulage, la bande moulage étant en appui contre le support de moulage ;
- la figure 9 est une vue en section d'un autre mode de réalisation du support de moulage, la bande de moulage étant en appui contre le support de moulage.

### Description détaillée de l'invention

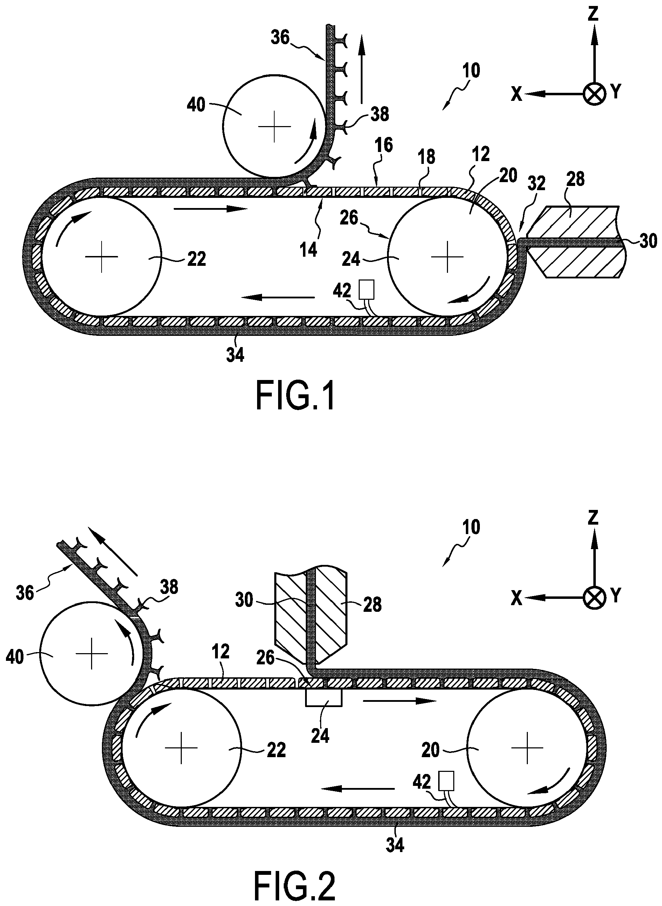

La figure 1 représente une vue schématique en coupe d'un appareil de moulage 10 pour la formation d'un dispositif de retenue. L'appareil de moulage 10 comprend une bande de moulage 12 fermée sur elle-même et comportant une face interne 14, une face externe 16, une pluralité de cavités 18 traversantes s'étendant de la face externe 16 à la face interne 14.

La bande de moulage 12 est tendue sur des moyens d'entrainement en rotation de la bande de moulage 12, par exemple deux rouleaux d'entrainement en rotation 20, 22. Un des rouleaux d'entrainement en rotation 20 de la bande de moulage 12 peut faire office de support de moulage 24. En particulier, un seul des deux rouleaux peut être entraîné en rotation par des moyens motorisés, par exemple le rouleau 20, l'autre rouleau 22 étant libre (sans moyens motorisés) et entraîné en rotation via la bande de moulage, elle-même entraînée par le rouleau 20.

Le support de moulage 24 comporte une face de moulage 26 destinée à venir en appui contre la face interne 14 de la bande de moulage 12. La face interne 14 de la bande de moulage 12 est en appui contre les rouleaux d'entrainement en rotation 20 de la bande de moulage 12.

L'appareil de moulage 10 comprend également un dispositif de distribution 28 de la matière plastique 30 dans les cavités 18 de la bande moulage 12. Sur la figure 1, le dispositif de distribution 28 d'une matière, par exemple une matière plastique 30, est disposé du côté de la face externe 16 de la bande de moulage 12, en vis-à-vis du support de moulage 24, c'est-à-dire que la matière plastique 30 est distribuée dans les cavités 18 de la bande de moulage lorsque la face interne 14 de la bande de moulage 12 est en appui contre la face de moulage 26 du support de moulage 24.

Par exemple, le dispositif de distribution 28 peut être une tête d'injection de matière plastique. La tête d'injection (ou tête d'extrusion) de matière plastique comportant une ouverture dont la largeur dans la direction transversale est inférieure ou égale à la largeur dans la direction transversale de la bande de moulage 12.

Sur la figure 1, le dispositif de distribution 28 est disposé à une certaine distance de la face externe 16 de la bande de moulage 12 de sorte à former un entrefer 32 entre la bande de moulage 12 et le dispositif de distribution 28.

Lors de la distribution de la matière plastique 30 dans les cavités 18 de la bande de moulage 12, une base 34 est également formée sur la face externe 16 de la bande de moulage 12, de sorte à former, une fois démoulé, un ruban 36 comportant une base 34 sur laquelle est formée une pluralité d'éléments de retenue 38 ou une pluralité de préformes d'éléments de retenue.

L'appareil de moulage 10 comporte également un rouleau de démoulage 40. Le rouleau de démoulage 40 peut par exemple être configuré de manière à séparer la base 34 du ruban 36 de la bande de moulage 12 sous l'effet de la tension du ruban 36 et de son changement de direction. Le rouleau de démoulage 40 peut être un rouleau d'aspiration ou comprendre un revêtement en caoutchouc pour permettre un démoulage plus aisé.

On notera que l'appareil de moulage 10 peut également comporter un dispositif de retrait d'un excès de matière plastique, tel qu'une racle 42 disposée, dans l'exemple de la figure 1, du côté de la face interne 14 de la bande de moulage 12 et après le support de moulage 24, dans le sens de défilement de la bande de moulage 12. On comprend donc que cette racle 42 est disposée après le dispositif de distribution 28.

La figure 2 représente une vue schématique en coupe d'un autre appareil de moulage 10 pour la formation d'un dispositif de retenue.

Dans ce qui suit, les éléments communs aux différents modes de réalisation sont identifiés par les mêmes références numériques.

L'appareil de moulage 10 de la figure 2 diffère de l'appareil de moulage 10 de la figure 1 en ce que, sur la figure 2, le support de moulage 24 est distinct des rouleaux d'entrainement en rotation 20 de la bande de moulage 12.

La direction longitudinale X est définie par le sens de défilement de la bande de moulage 12, la direction transversale Y est perpendiculaire à la direction longitudinale X et la direction de hauteur Z est perpendiculaire à la direction longitudinale X et à la direction transversale Y. Le plan XY définit un plan de la bande moulage 12 entre deux rouleaux d'entrainement en rotation 20, 22 de la bande de moulage.

La bande de moulage 12 peut présenter, dans la direction longitudinale, une longueur (ou périmètre) comprise entre 0,5 et 5 mètres (m), lorsque la bande de moulage 12 est coupée et étendue à plat.

La bande de moulage 12 peut présenter, dans la direction transversale, une largeur comprise entre 5 et 3000 millimètres (mm). La largeur de la bande de moulage 12 peut être égale, par exemple, à 50 mm, 100 mm ou 200 mm.

La bande de moulage 12 peut également comprendre entre 10 et 500 cavités par centimètres carrés (cavités/cm²). Par exemple, la bande de moulage 12 peut comprendre 250 cavités/cm² ± 75 cavités/cm².

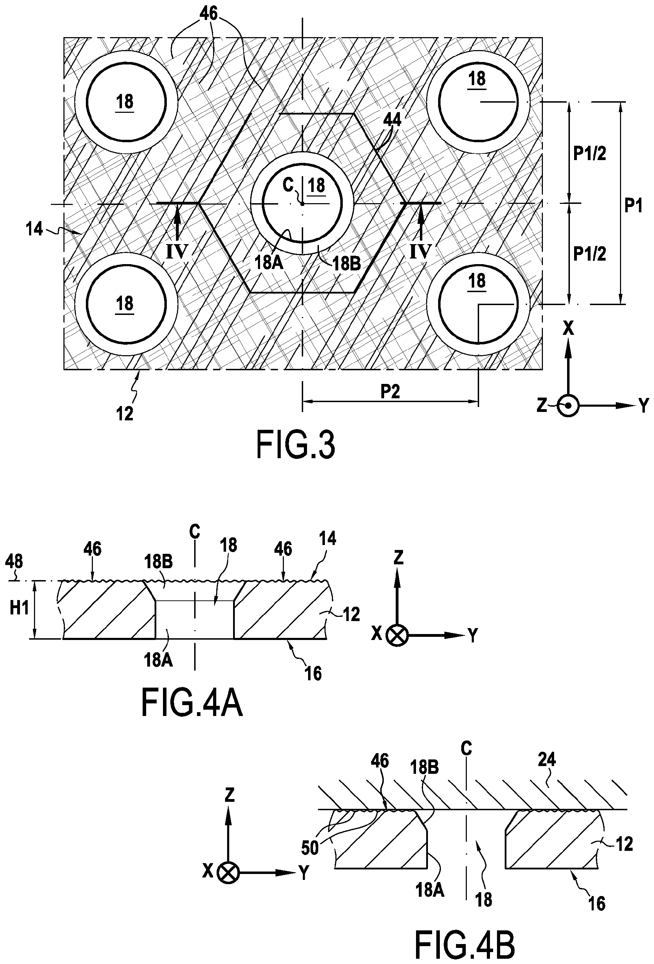

La figure 3 est une vue de la face interne 14 d'une bande de moulage 12. Cette bande de moulage 12 comporte des cavités 18 et présente une hauteur maximale de rugosité Rz de 3,23 micromètres (µm), mesurée selon les normes ISO 4287 et ISO 4288. Cette rugosité a été mesurée le long du profil 44. Par ailleurs, le long du même profil 44, l'écart moyen arithmétique du profil de rugosité Ra est de 532,21 nanomètres (nm), également mesurée selon les normes ISO 4287 et ISO 4288. Cette rugosité est obtenue en ponçant la face interne 14 de la bande de moulage 12 avec du papier de verre, par exemple du papier de verre grains 240. Le ponçage de la face interne 14 crée des stries de polissage formant un réseau de passages 46 sur la face interne 14 de la bande de moulage 12.

Sur la figure 3, chaque cavité 18 présente une symétrie de rotation autour d'un axe C parallèle à la direction de hauteur Z.

Sur la figure 3, on peut voir que les cavités 18 sont alignées selon la direction longitudinale X et forment une pluralité de rangées dans la direction longitudinale X. Dans le mode de réalisation de la figure 3, les cavités 18 d'une rangée sont espacées l'une de l'autre d'un pas P1, le pas P1 étant mesuré entre deux axes C de deux cavités 18 immédiatement adjacentes d'une même rangée. Deux rangées immédiatement adjacentes sont espacées l'une de l'autre d'un pas P2, le pas P2 étant mesuré dans la direction transversale, et les cavités des deux rangées sont décalées l'une de l'autre dans la direction longitudinale d'un demi pas P1, c'est-à-dire d'un pas P1 divisé par 2, aussi noté P1/2. Cette valeur du décalage n'est nullement limitative. Dans l'exemple de la figure 3, le pas P1 est strictement supérieur au pas P2.

La figure 4A représente une vue partielle en coupe de la bande de moulage 12 centrée sur la cavité 18 dans le plan de coupe IV-IV de la figure 3. Ce plan de coupe IV-IV est parallèle au plan ZY et comprend l'axe C de la cavité 18. La bande de moulage 12 présente une face externe 16 et une face interne 14. La face interne 14 présente une rugosité telle que définie précédemment. La hauteur H1 de la cavité 18, mesurée dans la direction de hauteur Z, est mesurée par rapport à deux surfaces médianes définissant chaque face, dans le cas présent entre la face externe 16 de la membrane et une surface imaginaire 48 matérialisée sur la figure 4A par un plan médian de la face interne 14.

Dans la direction de hauteur Z, chaque cavité 18 a une hauteur H1 supérieure ou égale à 5,0 µm, de préférence supérieure ou égale à 20,0 µm, encore plus de préférence supérieure ou égale à 100,0 µm et inférieure ou égale à 5 000,0 µm, de préférence inférieure ou égale à 800,0 µm, encore plus de préférence inférieure ou égale à 500,0 µm.

La cavité 18 présente une première partie 18A définissant une tige de l'élément de retenue 38 et comprend une deuxième partie 18B, formant une extrémité de la cavité 18, s'étendant à partir de la tige vers la face interne 14 de la bande de moulage 12 et formant une tête de l'élément de retenue 38 (ou de la préforme). La première partie 18A définissant la tige peut être de forme cylindrique ou tronconique. Par exemple, la première partie 18A peut présenter un diamètre qui décroit en partant de la face externe 16 et en se dirigeant vers la face interne 14. La deuxième partie 18B formant la tête s'étend typiquement radialement ou transversalement par rapport à un axe parallèle à celui de la tige, c'est-à-dire parallèle à la direction de hauteur. En particulier, le diamètre de la tête s'élargi en se déplaçant à partir de la partie 18A vers la face interne 14 de la bande de moulage 12. Plus particulièrement, la tête présente une forme sensiblement tronconique. En variante, on pourrait envisager de former une tête présentant une forme hexaédrique. En variante, on pourrait aussi envisager que la cavité présente au moins une partie une forme hyperboloïde de rotation ou de révolution.

La rugosité de la face interne 14 de la bande de moulage 12 forme le réseau de passages 46, le réseau de passage 46 formant évent 50 et reliant les cavités 18 entre elles lorsque la bande de moulage 12 est en appui contre le support de moulage 24, c'est-à-dire lorsque la face interne 14 de la bande de moulage 12 est en appui contre la face de moulage 26 du support de moulage 24, comme représenté sur la figure 4B.

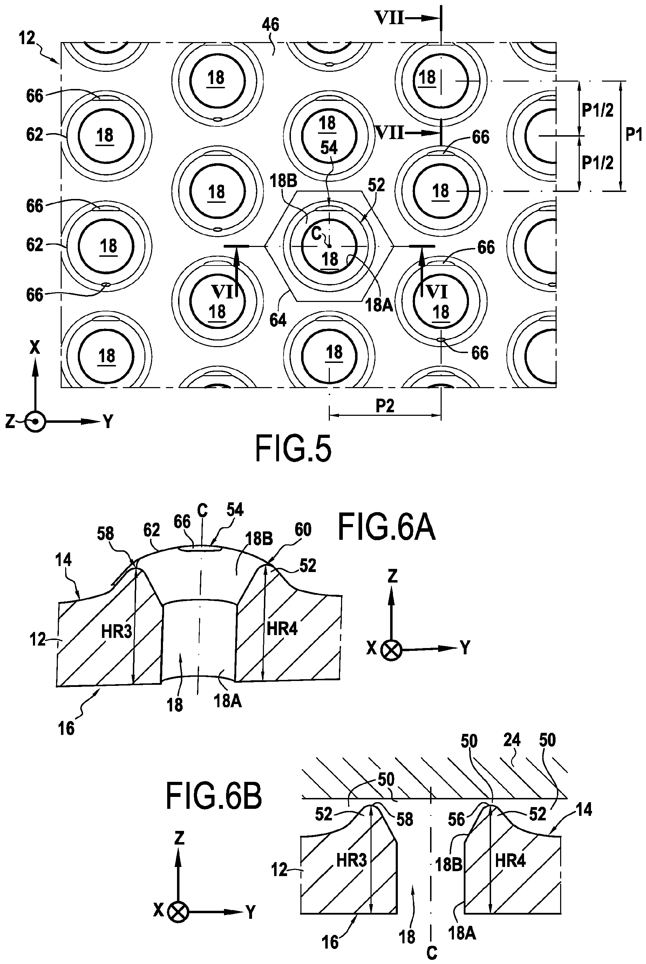

La figure 5 est une vue de la face interne 14 d'une bande de moulage 12 selon un autre mode de réalisation de la bande de moulage 12. Cette bande de moulage 12 comporte des cavités 18. Comme dans le mode de réalisation de la figure 3, on peut voir, sur la figure 5, que les cavités 18 sont alignées selon la direction longitudinale X et forment une pluralité de rangées dans la direction longitudinale X. Dans le mode de réalisation de la figure 5, les cavités 18 d'une rangée sont espacées l'une de l'autre d'un pas P1, le pas P1 étant mesuré entre deux axes C de deux cavités 18 adjacentes d'une même rangée. Deux rangées immédiatement adjacentes sont espacées l'une de l'autre d'un pas P2, le pas P2 étant mesuré dans la direction transversale, et les cavités des deux rangées sont décalées l'une de l'autre dans la direction longitudinale d'un demi pas P1, c'est-à-dire d'un pas P1 divisé par 2, aussi noté P1/2. Bien qu'identifiés par les mêmes références numériques, on comprend que les pas P1 et P2 peuvent varier entre le mode de réalisation de la figure 3 et le mode de réalisation de la figure 5. Ainsi, dans l'exemple de la figure 5, le pas P1 est strictement supérieur au pas P2.

On notera que le réseau de passages 46 formés entre les rebords 52 comprend une portion 64 du réseau de passages 46 entourant une cavité 18 qui présente une forme sensiblement hexagonale. Plus particulièrement, c'est le fond du réseau de passages 46 entourant une cavité 18 qui présente cette forme sensiblement hexagonale.

Sur la figure 5, la face interne 14 de la bande de moulage 12 présente un rebord 52 entourant une partie débouchante de chaque cavité 18 et faisant saillie de la face interne 14 de la bande de moulage 12.

Sur la figure 5, chaque cavité 18 présente une symétrie de rotation autour d'un axe C parallèle à la direction de hauteur Z. Toutefois, le rebord 52 peut ne pas présenter de symétrie de rotation.

Ainsi, comme le rebord 52 faisant saillie de la face interne 14 de la bande de moulage 12, une partie du réseau de passages 46 est formé par la face interne 14 de la bande de moulage 12, entre les rebords 52. Par ailleurs, chaque rebord 52 présentant une hauteur variable HR1, HR2, HR3, HR4, lorsque la bande de moulage 12 est en appui contre le support de moulage 24, au moins une partie du rebord 52 n'est pas en appui contre le support de moulage 24, de sorte qu'une partie du réseau de passages 46 est également formée par une partie du rebord 52. La surface de la bande de moulage en appui contre la face de support de moulage est strictement inférieure à 100% (sans tenir compte de la surface des cavités), plus particulièrement inférieure à 98%. La surface d'appui est supérieure à 5%. Dans certains cas, la surface de la bande de moulage en appui contre la face du support de moulage est comprise entre 15 et 45%. Dans certain cas, la surface de la bande de moulage en appui contre la face de support de moulage est comprise entre 55 et 90%.

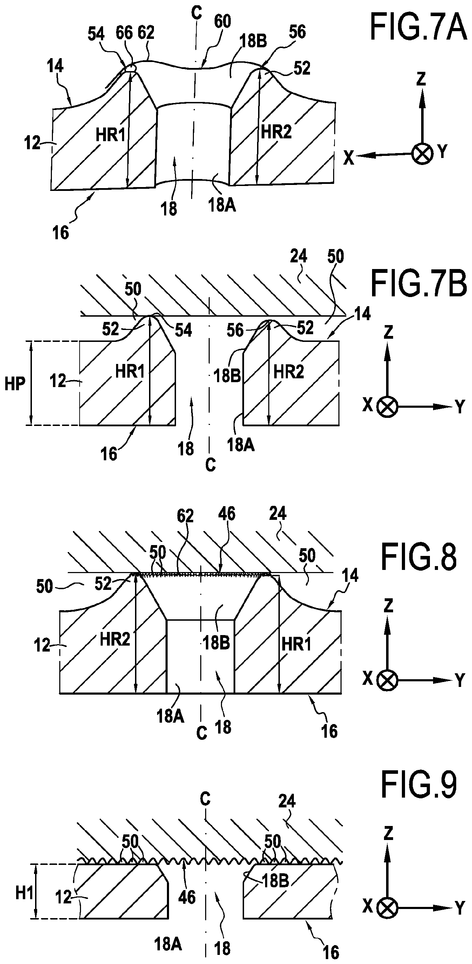

Comme représenté sur les figures 6A, 6B, 7A et 7B, chaque rebord 52 présente une hauteur variable HR1, HR2, HR3, HR4. Ces hauteurs sont mesurées par rapport à la face externe 16 de la bande de moulage 12. Par ailleurs, cette hauteur HR1, HR2, HR3, HR4 est la hauteur maximale du rebord 52, mesurée dans un plan de coupe parallèle à la direction de hauteur Z, c'est-à-dire parallèle à l'axe C des cavités 18, et passant par la cavité 18. De préférence, le plan de coupe comprend l'axe C. En effet, dans le plan de coupe, en vue en section, le rebord 52 présente une hauteur maximale.

Dans la direction de hauteur Z, chaque cavité 18 a au moins une hauteur HR1, HR2, HR3 ou HR4 supérieure ou égale à 5,0 µm, de préférence supérieure ou égale à 20,0 µm, encore plus de préférence supérieure ou égale à 100,0 µm et inférieure ou égale à 5 000,0 µm, de préférence inférieure ou égale à 800,0 µm, encore plus de préférence inférieure ou égale à 500,0 µm.

Dans le mode de réalisation de la figure 5, le rebord 52 présente deux maxima 54, 56 et deux minima 58, 60 les deux maxima 54, 56 étant séparés par un minima et les deux minima 58, 60 étant séparés par un maxima. Ainsi, lorsque l'on parcoure le rebord 52 le long de la ligne de hauteurs maximales 62, c'est-à-dire la succession de hauteurs maximales du profil mesurées dans un plan de coupe de la cavité 18, on passe par un premier maxima 54, on passe ensuite par un premier minima 58 avant de passer à un second maxima 56 et ensuite à second minima 60 pour enfin retourner au premier maxima 54.

Dans l'exemple des figures 5, 6A, 6B, 7A et 7B, les maxima 54, 56 correspondent respectivement aux hauteurs HR1 et HR2 et les minima 58, 60 correspondent respectivement aux hauteurs HR3 et HR4.

Dans l'exemple des figures 5, 6A, 6B, 7A et 7B, la hauteur HR1 du premier maxima 54 est différente de la hauteur HR2 du second maxima 56. De même, la hauteur HR3 du premier minima 58 est différente de la hauteur HR4 du second minima 60.

Par exemple, un maximum de différence entre deux hauteurs d'un même rebord 52 d'une cavité 18 peut être supérieur ou égal à 1,0 µm, de préférence supérieure ou égal à 2,0 µm, encore plus de préférence supérieure ou égal à 4,0 µm et inférieure ou égale à 100,0 µm, de préférence inférieure ou égale à 50,0 µm. Par exemple, si l'on considère que HR1 est supérieur à HR2 et que HR3 est supérieur à HR4, le maximum de différence est mesuré entre HR1 et HR4 et est par exemple égal à 14,0 µm.

Ainsi, le rebord 52 présentant une hauteur variable, on compare plusieurs des hauteurs maximales d'un même rebord 52, c'est-à-dire les hauteurs maximales du rebord 52 mesurées dans différents plans de coupe parallèles à la direction de hauteur, autrement dit, les hauteurs du rebord 52 prises le long de la ligne de hauteurs maximales 62. On détermine un maximum de différence entre toutes les hauteurs, ce maximum est par exemple supérieur ou égal à 1,0 µm, de sorte à former un passage d'air entre la cavité 18 et le reste du réseau de passages 46.

On notera également qu'un maximum de différence entre la hauteur d'au moins un des rebords 52 et une hauteur HP d'un passage 46 adjacent dudit rebord 52 est inférieure ou égale à 100,0 µm, par exemple égale à 35,0 µm.

On constate que le rebord 52 comporte au niveau du maxima 54 un plateau 66. Sur la figure 5, le plateau 66 est de forme sensiblement oblongue et présente une dimension selon la direction longitudinale X d'environ 150,0 µm et une dimension selon la direction transversale d'environ 45,0 µm.

Au cours de l'utilisation de la bande de moulage 12, les dimensions de ces plateaux 66 ont tendance à augmenter suite à l'usure par frottement de la bande de moulage 12 contre le support de moulage 24. Ainsi, sur une bande de moulage 12 neuve, ces plateaux 66 peuvent ne pas être présents ou n'être présent que sur un des maxima du rebord 52. Ensuite, au fur et à mesure des contacts répétés de la bande de moulage 12 avec le support de moulage 24 et/ou avec les rouleaux d'entrainement en rotation 20, 22 de la bande de moulage 12, ces plateaux 66 peuvent être présents sur tous les maxima des rebords 52 et leurs dimensions peuvent varier d'un rebord à l'autre et au cours du temps.

La figure 8 présente une vue partielle en coupe et en perspective d'une cavité 18 selon un autre mode de réalisation de la bande de moulage 12, la bande moulage 12 étant en appui contre le support de moulage 24.

Dans l'exemple de la figure 8, le rebord 52 qui entoure la cavité 18 et fait saillie de la face interne 14 de la bande de moulage 12 présente une ligne de hauteurs maximales 62 comprenant une succession de maxima et minima, de sorte que lorsque la bande de moulage 12 est en appui contre le support de moulage 24, la cavité 18 est connectée avec l'atmosphère et avec les autres cavités par l'intermédiaire du réseau de passages 46 formant évent 50.

La figure 8 peut également représenter une bande de moulage 12 dont le rebord 52 qui entoure la cavité 18 et fait saillie de la face interne 14 de la bande de moulage 12 présente une ligne de hauteurs maximales 62 sensiblement constante, c'est-à-dire que les hauteurs HR mesurées à partir de la face externe 16 sont sensiblement égales, et présente une hauteur maximale de rugosité Rz supérieure ou égale à 1,0 µm, de préférence supérieure ou égale à 3,0 µm et inférieure ou égale à 50,0 µm.

La figure 9 représente un mode de réalisation de l'appareil de moulage 10 dans lequel le support de moulage 24 présente une hauteur maximale de rugosité Rz supérieure ou égale à 1,0 µm, de préférence supérieure ou égale à 3,0 µm et inférieure ou égale à 50,0 µm.

Dans le mode de réalisation de la figure 9, la bande de moulage 12 ne présente pas de rebord. Cependant, on pourrait envisager de combiner le support de moulage 24 de la figure 9 avec l'un quelconque des modes de réalisation de la bande de moulage présentés précédemment.

Ainsi, la face interne 14 de la bande moulage 12 pourrait également présenter une hauteur maximale de rugosité Rz supérieure ou égale à 1,0 µm, de préférence supérieure ou égale à 3,0 µm et inférieure ou égale à 50,0 µm et/ou, la bande de moulage 12 pourrait présenter des rebords 52 entourant chaque cavité 18.

Quoique le présent exposé ait été décrit en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif. Par exemple, l'appareil de moulage 10 des figures 1 et 2 comprend deux rouleaux d'entrainement en rotation 20 de la bande de moulage 12, il pourrait en comprendre trois. On comprend que le nombre de rouleau et leur agencement n'est pas limitatif. Leur nombre et leur agencement peuvent varier afin de s'adapter à la longueur de la bande de moulage 12 et/ou aux différentes configurations des postes de l'appareil de moulage 10. Par exemple, le rouleau 22 pourrait également être équipé de moyens motorisés comme le rouleau 20. Par ailleurs, le pas P1 peut être égal au pas P2, le pas P1 peut être strictement inférieur au pas P2 lorsqu'un rebord entoure chaque cavité et inversement, lorsque la face interne 14 de la bande de moulage 12 ne présente pas de rebord entourant les cavités 18, le pas P1 peut être strictement supérieur au pas P2. On peut également envisager que deux rangées, prises dans la direction longitudinale, immédiatement adjacentes l'une à l'autre soient décalées l'une de l'autre dans la direction longitudinale d'un pas différent d'un demi pas P1. Dans l'exemple des figures 5, 6A, 6B, 7A et 7B, le rebord 52 présente deux maxima et deux minima. Cet exemple n'est pas limitatif.

On notera également que les figures ne sont pas des reproductions à l'échelle. Ainsi, pour une meilleure compréhension, certains détails ont été volontairement grossis afin de pouvoir être représentés.

La bande de moulage est, selon un mode de réalisation en nickel et comprend un taux de nickel supérieur à 90%. On pourrait envisager, d'utiliser également des bandes en cuivre, laiton, ou des alliages de métaux. Par ailleurs, on pourrait également envisager d'utiliser des bandes de moulage en acier seulement qui sont perforées, par exemple des bandes de moulage en acier inoxydable. On pourrait en outre envisager que la bande de moulage soit réalisée en un matériau organiques renforcées ou non, par exemple, une bande de moulage à base caoutchouc ou d'une bande de moulage en carbone époxy ou un tapis textile tissé ou tricoté ou encore un tapis textile métallique tissé ou tricoté.

Le dispositif de retenue à crochets est ici formé par un matériau plastique. En entend pas matériau plastique un matériau thermoplastique, plus particulièrement un matériau polyoléfine à base de d'homopolymère ou de copolymère.

A titre d'exemple, la liste de matière plastique : LLDPE (Linear Low Density PolyEthylène ou polyéthylène linéaire de faible densité), LDPE (Low Density PolyEthylène ou polyéthylène de faible densité), m-PE (Métallocène PolyEthylène), HDPE (High Density PolyEthylène ou polyéthylène de haute densité), EVA (Éthylène Acétate de Vinyle) et PP (PolyPropylène), comprenant une distribution de poids moléculaire monomodale ou multimodale (par exemple bimodale), en particulier une composition comprenant du LLDPE et d'un plastomère, notamment d'un plastomère base polyéthylène. On pourrait également utilisé du polyamide (PA), de l'acide polyactique (PLA), du polyhydroxyalcanoates (PHA), PVOH, PBS.

Différents systèmes et méthodes compatibles avec le présent exposé sont décrits dans les demandes de brevets FR 16 53866, FR 16 53870, FR 16 53872, FR 16 53873, FR 16 53888, FR 16 53894 et FR 16 53897, qui sont incorporées intégralement par référence à cette description.

## Revendications

1. Appareil de moulage (10) pour la formation d'un dispositif de retenue, l'appareil de moulage (10) comprenant une bande de moulage (12) et un support de moulage (24), la bande de moulage(12) comportant une face interne (14), une face externe (16), une pluralité de cavités (18) traversantes s'étendant de la face externe (16) à la face interne (14), la bande de moulage (12) s'étendant selon une direction longitudinale (X) et présentant une direction transversale (Y), perpendiculaire à la direction longitudinale (X), et une direction de hauteur (Z), perpendiculaire à la direction longitudinale (X) et à la direction transversale (Y), la face interne (14) étant configurée pour venir en appui contre une face de moulage (26) du support de moulage (24), dans lequel la face interne (14) de la bande de moulage (12) et/ou la face de moulage (26) du support de moulage (24) comporte un réseau de passages (46), le réseau de passages (46) formant évent (50) et reliant les cavités (18) entre elles lorsque la bande de moulage (12) est en appui contre le support de moulage (24), dans lequel chaque cavité (18) de la bande de moulage (12) est configurée pour former une préforme d'un élément de retenue (38).

2. Appareil de moulage (10) selon la revendication 1, dans lequel la face interne (14) de la bande moulage et/ou la face de moulage (26) du support de moulage (24) présente une hauteur maximale de rugosité Rz supérieure ou égale à 1,0 µm, de préférence supérieure ou égale à 3,0 µm et inférieure ou égale à 50,0 µm.

3. Appareil de moulage (10) selon la revendication 1 ou 2, dans lequel la face interne (14) présente un rebord (52) entourant une partie débouchante de chaque cavité (18) et faisant saillie de la face interne (14), les rebords (52) définissant entre eux le réseau de passages (46), chaque rebord (52) présentant une hauteur variable (HR1, HR2, HR3, HR4), de sorte que, lorsque la bande de moulage (12) est en appui contre le support de moulage (24), au moins une partie du rebord (52) n'est pas en appui contre le support de moulage (24), de sorte que chaque cavité (18) est connectée avec l'atmosphère par l'intermédiaire du réseau de passages (46).

4. Appareil de moulage (10) selon la revendication 3, dans lequel un maximum de différence entre deux hauteurs d'un même rebord (52) d'une cavité (18) est supérieur ou égal à 1,0 µm, de préférence supérieure ou égal à 2,0 µm, encore plus de préférence supérieure ou égal à 4,0 µm et inférieure ou égale à 100,0 µm, de préférence inférieure ou égale à 50,0 µm.

5. Appareil de moulage (10) selon l'une quelconque des revendications 1 à 4, dans lequel le réseau de passages (46) s'étend selon la direction longitudinale (X), et/ou le réseau de passages (46) s'étend selon la direction transversale (Y).

6. Appareil de moulage (10) selon l'une quelconque des revendications 1 à 5, dans lequel chaque cavité (18) définit une tige, s'étendant de la face externe (16) vers la face interne (14), et comprend une extrémité formant une tête, s'étendant à partir de la tige vers la face interne (14) de la bande de moulage (12).

7. Appareil de moulage (10) selon l'une quelconque des revendications 1 à 6, dans lequel le support de moulage (24) est un rouleau de moulage (20, 22).

8. Appareil de moulage (10) selon l'une quelconque des revendications 1 à 7, dans lequel la bande de moulage (12) comprend entre 10 et 500 cavités/cm².

9. Appareil de moulage (10) selon l'une quelconque des revendications 1 à 8, dans lequel, dans la direction de hauteur (Z), chaque cavité (18) a une hauteur supérieure ou égale à 5,0 µm, de préférence supérieure ou égale à 20,0 µm, encore plus de préférence supérieure ou égale à 100,0 µm et inférieure ou égale à 5 000,0 µm, de préférence inférieure ou égale à 800,0 µm, encore plus de préférence inférieure ou égale à 500,0 µm.

10. Appareil de moulage (10) selon l'une quelconque des revendications 1 à 9, dans lequel la bande de moulage (12) comprend un matériau à base de nickel.

11. Appareil de moulage (10) selon l'une quelconque des revendications 1 à 10, dans lequel la bande de moulage (12) présente, dans la direction longitudinale (X), une longueur comprise entre 0,5 et 5 m et/ou la bande de moulage (12) présente, dans la direction transversale (Y), une largeur comprise entre 5 et 3 000 mm.

12. Appareil de moulage (10) selon l'une quelconque des revendications 1 à 11, dans lequel chaque cavité (18) présente une symétrie de rotation autour d'un axe (C) parallèle à la direction de hauteur.

13. Appareil de moulage (10) selon l'une quelconque des revendications 1 à 12, dans lequel les cavités (18) sont alignées selon la direction longitudinale (X) et forment une pluralité de rangées dans la direction longitudinale (X), les cavités (18) d'une rangée sont espacées l'une de l'autre d'un premier pas (P1) selon la direction la direction longitudinale (X), et deux rangées immédiatement adjacentes sont espacées l'une de l'autre d'un second pas P2, le second pas P2 étant mesuré dans la direction transversale (Y), et les cavités de deux rangées immédiatement adjacentes sont décalées l'une de l'autre dans la direction longitudinale d'un pas égal à la moitié du premier pas (P1).

14. Appareil de moulage (10) selon l'une quelconque des revendications 1 à 13 prise en combinaison avec la revendication 3, dans lequel une portion (64) du réseau de passages (46) entourant au moins une des cavités (18) présente une forme sensiblement hexagonale.

15. Appareil de moulage (10) selon l'une quelconque des revendications 1 à 14 prise en combinaison avec la revendication 3, dans lequel un maximum de différence entre la hauteur d'au moins un des rebords (52) et une hauteur d'un passage (46) adjacent dudit rebord (52) est inférieure ou égale à 100,0 µm.
